# EUROPEAN PATENT SPECIFICATION

(11) **EP 2 278 178 B1**
(45) Date of publication and mention of the grant of the patent: **27.02.2013**
(21) Application number: 09425280.6
(22) Date of filing: 14.07.2009
(51) Int. Cl.: F16C 11/06

(54) **Ball joint for connecting mechanical elements**
Kugelgelenk zum verbinden mechanischer Teile
Joint à rotule pour connecter des éléments mécaniques

(43) Date of publication of application: 26.01.2011
(73) Proprietor: Orsolini, Fulvio, 21054 Fagnano Olona (VA) (IT)
(72) Inventor: Orsolini, Fulvio, 21054 Fagnano Olona (VA) (IT)
(74) Representative: Lunati & Mazzoni S.r.L.

(56) References cited:
- EP-A- 0 801 238
- EP-A1- 1 798 431
- DE-A1- 19 813 721
- DE-A1-102006 003 245
- FR-A- 2 649 171
- FR-A- 2 733 285
- US-A- 5 265 495
- US-A1- 2006 039 748

## Description

The invention relates to a ball joint for connecting mechanical elements, of the type specified in the preamble of claim 1.

In particular, it relates to a ball joint shaped substantially as an angular joint and interposed between tie-rod or rod elements, one of which is provided with a ball head engageable by said ball joint.

Similar ball joint are described in patent applications US-A-5265495, which is considered as being the closest prior art, and FR-A-2733285.

As it is known, there are used in the mechanical field ball joints, which allow or transmit angular oscillations to rods or tie-rods or the like and which therefore allow the formation of jointed kinematic chains, for example provided in the sector of vehicles and of relative transmission and/or control members, such as those which select the various gears of a gearbox.

A feature of the ball joints in question is that they are provided with a case with an inner seat sized to contain a ball head, also cylindrical, or a ball pin of a first mechanical element, which can be inserted pivotally through a specific opening.

Outside the case means are provided for engaging with a second mechanical element abutting with an outer ring or eye or the like surrounding said case.

To prevent vibrations, sticking or jerking movements from being transmitted along the kinematic chain including the joints, and also to make forces more gradual, an elastic body is inserted in joints, between said case and the outer eye or ring.

The elastic body is a band of elastomeric material or the like surrounding the case and in turn encircled by the outer ring or eye.

The elastic body is elastically deformed by the forces which are exerted between the case - incorporating a ball head - and the eye.

The provision of an elastic body is advantageous for various aspects: it filters vibrations, stabilizes the kinematic chain and makes the movements thereof more silent. Moreover, manual control of the kinematic chain is softer and more pleasing. For other aspects, said elastic body gives rise to various problems and to important drawbacks.

In fact, an important aspect of ball joints concerns the methods for their recycling when they, or the devices in which they are incorporated, are no longer used.

In these cases the various components are recovered to re-use the materials of which they are composed, normally high quality.

To recover said materials it is necessary first to disassemble and extract the elastic bodies, as they are made of an entirely different material, e.g. an elastomer, to the other components, which are made, for example, of metal materials.

The same procedure is followed when wishing to perform repairs which require replacement of worn elastic bodies.

Extraction of the elastic bodies can nonetheless be difficult and costly, especially when they have a shape with various expanded parts inside the joint.

For example, elastic bodies have been produced with edge expansions suitable to surround the eye, for the purpose of obtaining stable engagement.

However, elastic bodies of particularly large sizes are costly and lead to the construction of bulky ball joints.

Moreover, the expansions surrounding the eye also make immediate disassembly impossible and above all they must be assembled accurately to obtain precise positioning of the expansions. Moreover, these expansions can be easily broken.

In practice, numerous rejects may be produced or repairs may be required during assembly.

In other cases, the elastic bodies are made stable in position by bonding them to one of the metal members between which they are inserted.

Bonding creates noteworthy obstacles and difficulties, with consequent costs, for removal of the elastic bodies, but seems unavoidable when they are not held stably in place by the other elements of the joint.

Likewise, bonding seems unavoidable when the elastic bodies have a privileged working position, i.e. due to greater flexibility in a given direction, which must preferably coincide with the direction of prevalent forces.

It is also known to produce joints with a non-circular, and in particular elliptical, eye, with consequent production of elastic bodies which are elliptical in shape externally, and therefore with a specific angular position and different thicknesses in relation to the direction of the forces.

However, a non-circular outer ring or eye is not as strong as a circular ring of the same weight. Moreover, the other elements of the ball joint, in particular the case that houses the ball head, require special machining, as they must take account of a peripheral elliptical shape and of a central circular shape.

Moreover, the overall dimensions of the joint at the major axis of the ellipse is relatively high.

Given this situation, the technical aim underlying the present invention is to devise a ball joint substantially capable of overcoming the aforesaid drawbacks.

Within this technical aim, an important object of the invention is to devise a ball joint having stable engagement of the elastic body, without requiring operations to bond it. Another important object of the invention is to devise a ball joint provided with an elastic body which can be immediately inserted in a specific angular position.

A further object is to devise a ball joint with a very simple structure and which can be easily and rapidly assembled and disassembled.

Last but not least object of the invention is to provide a ball joint which is solid, reliable and relatively small.

Said technical aim and the objects specified are achieved by a ball joint for connecting mechanical elements as claimed in the appended claim 1.

Preferred embodiments are highlighted in the dependent claims.

The features and advantages of the invention are better explained below in the detailed description of preferred embodiments of the invention, with reference to the attached drawings, wherein:
- Fig. 1 shows an elevated view and a sectional view of a ball joint according to the invention, in assembled position and arranged abutting with a ball head;
- Fig. 2 shows a top view of some elements of the ball joint, in particular the outer ring and the elastic body connected thereto;
- Fig. 3 shows an elevated view and an exploded sectional view of all the elements of the ball joint; and
- Fig. 4 shows an enlarged perspective view of the elastic body shown in the preceding figures.

With reference to the Figures, the ball joint according to the invention is indicated as a whole with the number 1.

It is provided for connecting mechanical elements 2, 3, selectively provided with a ball head 4. The mechanical elements consist, for example, of rods or struts or tie-rods or cables and the drawings show a portion of a first mechanical element 2 terminating with the ball head 4 and a portion of a second mechanical element 3 defined by a rod. In particular, the ball joint 1 can realize a "terminal lug" for car gear shifts.

The ball joint 1 comprises, in a known manner, a case 5 of box-shaped type, for example made of metal, having an inner chamber 6 and an opening 6a to allow insertion of the ball head 4 in the inner chamber 6.

A shell 7, made of wear-proof plastic material and defining a seat 7a sized to contain the ball head 4, is provided in the inner chamber 6.

The case 5, the inner chamber 6 and the seat 7a define a central axis 1a at which the ball head 4 is placed.

An outer eye or ring 8, for example made of plastic material and encircling the case 5 at a distance, is also provided.

The eye 8 is substantially circular in shape and is provided with means 3a for engaging with the second mechanical element 3.

These engaging means 3a preferably consist of a hollow appendage produced in one piece with the eye 8.

An advantageous and original elastic body 9 made of strong elastic material, preferably comprising different vulcanized polymers according to the various requirements, is inserted between the case 5 and the eye 8.

The elastic body 9 is bonded neither to the eye 8 nor to the case 5 and is simply inserted therebetween.

Moreover, the elastic body 9 has different deformation capacities according to the direction of the forces to which it is subjected, as specified below.

In this situation, to allow a correct insertion position and ensure stability thereof, the elastic body 9 is originally provided with first grooves 9a. Moreover, the case 5 and the eye 8 are selectively provided with ridges 10 countershaped to the first grooves 9a.

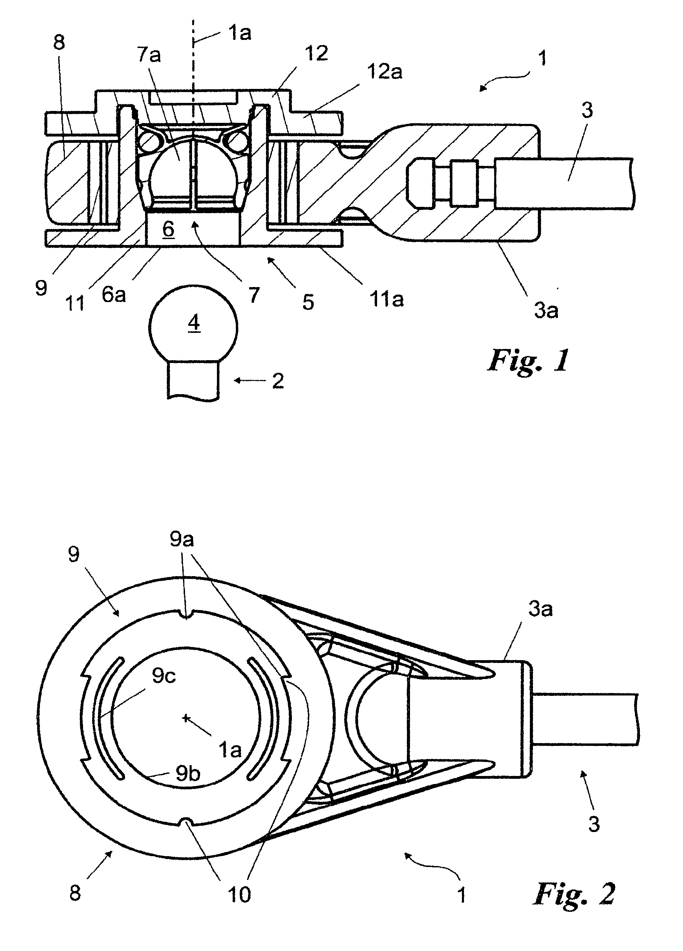

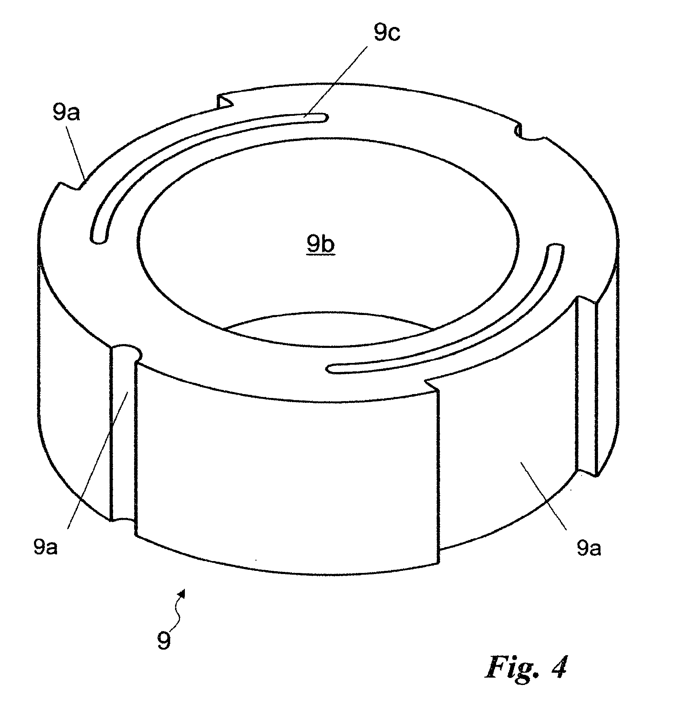

Advantageously, the grooves 9a, and the ridges 10 are structured as regards shape and size in a manner suitable to define a single angular position of insertion of the elastic body 9. As shown in Figs. 2 and 4, the first grooves 9a are advantageously produced on the outer cylindrical surface of the elastic body 9 and the ridges 10 are produced on the eye 8, on the inner face thereof facing the elastic body 9.

In practice, the elastic body 9 is a compact tubular element (Fig. 4) with no expansions which has sections of various sizes - produced perpendicular to the central axis 1a, when the elastic body 9 is in the position assembled in the ball joint 1 - having a substantially circular annular shape.

The cylindrical outer surface of the elastic body 9 is shaped and defined by the first grooves 9a, while the cylindrical inner surface 9b is substantially smooth.

The smooth cylindrical inner surface 9b is facing the case 5 and the latter in turn has a smooth cylindrical area 5a facing the elastic body 9.

Therefore, the elastic body 9 maintains a fixed and predetermined position with respect to the eye 8, due to engagement between the first grooves 9a and the ridges 10, while the case 5 rotates freely.

As already mentioned, moreover, the elastic body 9 has different deformation capacities according to the direction of the forces to which it is subjected.

In fact, inner recesses 9c are provided, arranged in diametrically opposite areas of the elastic body 9. With their presence, they allow greater deformations of the elastic body 9 for example in the direction defined by the rod forming the second mechanical element 3.

The inner recesses 9c also pass through the elastic body 9 from side to side in a direction parallel to the central axis 1a, when the elastic body 9 is in the assembled position.

Moreover, the first grooves 9a produced on the cylindrical outer surface of the elastic body 9 are positioned so as to present sectors of reduced thickness in the areas with the inner recesses 9c.

The box-shaped case 5 - provided externally with the smooth cylindrical area 5a facing the elastic body 9 and internally with the chamber 6 housing the ball head 4 - comprises a base **11** and a cover 12 suitable to close the inner chamber 6 at the opposite end to the opening 6a. The base 11 and the cover 12 are also provided with respective flanged expansions **11a,** 12a dilating in a manner suitable to act as a sides to contain and protect the elastic body 9.

Moreover, the elastic body 9 has a size similar to that of the eye 8, in a direction parallel to the central axis 1a, and therefore the elastic body 9 is completely enclosed between the case 5 and the eye 8.

In particular, the flanged expansions 11a, 12a extend in a manner suitable also to act as a sides to contain and protect the eye 8.

The cover 12 has an annular groove 12b suitable to matingly house the end of the base 11 located at the end opposite the opening 6a, and advantageously the cover 12 is ultrasonically welded to the base 11, along the annular groove 12b.

Said shell 7 inserted in the chamber 6 is provided with appendages 13 which abut against the cover 12 and which are elastically deformable in a manner suitable to allow small movements of the ball head 4 in a direction parallel to the central axis 1a. Originally, the shell 7, preferably made of material composed of nylon 6 6, silicone, fibreglass or Teflon, comprises two mutually articulated half-shells 14, and an elastic ring 15 engaging the half-shells 14 at the appendages 13, in a manner suitable to maintain the half-shells in a correct position inside the inner chamber 6.

Operation of the ball joint 1, the structure of which is described above, is as follows.

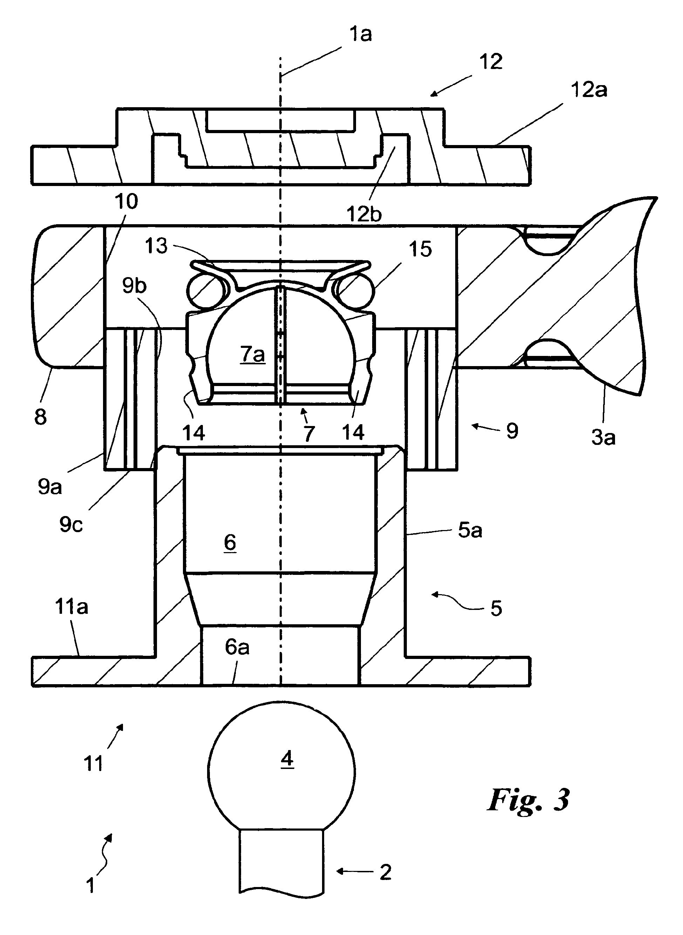

During assembly the various elements can be mutually assembled simply and rapidly, as schematized in Fig. 3. All the parts, with the exception of the cover 12, do not mutually overlap and therefore assembly mainly simply involves coaxial positioning of the single parts.

Precise assembly - in an angular direction - of the elastic body 9 is then made possible by the first grooves 9a and the ridges 10, which define an obligatory angular position of the elastic body 9.

Assembly of the cover 12 is the final step of producing the joint and also in this case any errors are prevented due to the presence of the annular groove 12b, which determines the position of the base 11. The weld is then made immediately using ultrasound.

In the situation of complete assembly, the ball head 4 is perfectly contained in the seat 7a and can rotate easily in all directions. The shell 7 with its flexible structure prevents forcing on the ball head 4 during rotations.

The forces imparted by or deriving from the kinematic chain of which the ball joint 1 is part are thus absorbed by the elastic body 9.

The latter is also capable of becoming elastically deformed in a differentiated manner depending on the direction of the forces, as a result of the presence of the inner recesses 9c.

The elastic body 9 then ensures maximum solidity and duration of the joint 1, as it has a very compact cylinder shape, without expansions or weak points, and as when installed it is completely inside the joint 1 and protected in all its parts. In particular, the flanged expansions 11a, 12a respectively of the base 11 and of the cover 12, prevent any external mechanical element from coming into contact with the elastic body or from damaging it.

Disassembly of the ball joint 1 is also easy and advantageous, when it is no longer used and its parts are recovered for recycling of the materials of which they are composed.

In this case it is necessary to extract the elastic body 9, made of different material and incompatible - for recovery purposes - with the members of metal structure.

Extraction is extremely easy as the joint is decomposed immediately into its various parts as soon as the cover 12 is detached, for example by tapping it sharply. The position of the cover 12 is in fact stable and reliable due to the presence of the annular groove 12b, but the ultrasound weld can be broken.

In particular, after removing the cover 12, the elastic body is removed simply by sliding, as also shown in Fig. 3. It is therefore possible to simply recycle the ball joint 1.

The invention obtains the proposed objects and achieves important advantages.

In fact, a reliable, simple and functional structure, immediately assemblable and disassemblable and without noteworthy costs, has been provided.

No bonding operations are required, even if the elastic body is arranged to react in a different manner according to the direction of the forces.

The elastic body 9 is well protected by the flanged expansions 11a, 12a and has a structure advantageous for its compactness, for its tubular shape and for the grooves produced on the outer surface thereof.

The invention is susceptible to modifications and variants falling within the inventive concept. The details can be replaced by equivalent elements and the materials and dimensions can be any.

## Claims

1. A ball joint (1) for connecting mechanical elements (2, 3) selectively provided with a ball head (4), said ball joint (1) comprising: a case (5) defining a central axis (1a) and having an inner chamber (6) for said ball head (4) and an opening (6a) for access to said inner chamber (6), an annular eye (8) external to said case (5), and an elastic body (9) positioned between said case (5) and said eye (8), in which said case (5) is provided with flanged expansions (11 a, 12a) dilated transversely to said central axis (1a) and suitable to act as opposite sides to contain and protect said elastic body (9), said ball joint (1) being **characterized in that** said elastic body (9) is a tubular element with no annular radial expansions and it is provided with first grooves (9a), and **in that** said eye (8) is provided with ridges (10) countershaped to said first grooves (9a) and suitable to define a predetermined and stable angular position around said central axis (1a) between said elastic body (9) and said eye (8).

2. The ball joint according to the preceding claim, wherein said elastic body (9) is provided with a substantially smooth cylindrical inner surface (9b) facing said case (5) and a cylindrical outer surface provided with said first grooves (9a), and wherein said eye (8) is provided with an inner face facing said elastic body (9) and provided with said ridges (10).

3. The ball joint (1) according to one or more of the preceding claims, wherein parallel to said central axis (1a) said elastic body (9) has a size similar to that of said eye (8), and wherein said elastic body (9) is entirely enclosed between said case (5), said flanged expansions (11a, 12a) and said eye (8).

4. The ball joint (1) according to one or more of the preceding claims, wherein said case (5) comprises a base (11) and a cover (12) suitable to close said inner chamber (6) at the opposite end to said opening (6a), and wherein said flanged expansions (11a, 12a) are integral respectively with said base (11) and with said cover (12).

5. The ball joint (1) according to claim 4, wherein said cover (12) is provided with an annular groove (12b) suitable to matingly engage said base (11).

6. The ball joint (1) according to claim 4 or 5, wherein said cover (12) is ultrasonically welded to said base (11).

7. The ball joint (1) according to one or more of the preceding claims, wherein said elastic body (9) is provided with inner recesses (9c) suitable to determine different deformation capacities according to the direction of forces.

8. The ball joint (1) according to claim 7, wherein said inner recesses (9c) pass through said elastic body (9) parallel to said central axis (1 a).

9. The ball joint (1) according to one or more of the preceding claims, wherein said inner chamber (6) houses a shell (7) defining a seat (7a) substantially sized to contain said ball head (4), and wherein said shell (7) is provided with appendages (13) elastically deformable and opposingly engageable with said inner chamber (6) at the opposite end from said opening (6a).

10. The ball joint (1) according to claim 9, wherein said shell (7) comprises two mutually articulated half shells (14) and wherein an elastic ring (15) is provided, engaging said half-shells (14) at the appendages (13).

## Patentansprüche

1. Kugelgelenk (1) zum Verbinden mechanischer Elemente (2, 3), wahlweise mit einem Kugelkopf (4), wobei das genannte Kugelgelenk (1) Folgendes umfasst: ein Gehäuse (5), das eine zentrale Achse (1a) definiert und über eine Innenkammer (6) für den genannten Kugelkopf (4) und eine Öffnung (6a) für den Zugang zu der genannten Innenkammer (6) verfügt, eine ringförmige Öse (8) außen an dem genannten Gehäuse (5) und einen elastischen Körper (9), der sich zwischen dem genannten Gehäuse (5) und der genannten Öse (8) befindet, wobei das genannte Gehäuse (5) mit Flanscherweiterungen (11a, 12a) versehen ist, die sich quer zu der genannten zentralen Achse (1a) ausdehnen und geeignet sind, als gegenüberliegende Seiten zum Eingrenzen und Schützen des genannten elastischen Körpers (9) zu dienen, wobei das genannte Kugelgelenk (1) **dadurch gekennzeichnet ist, dass** der genannte elastische Körper (9) aus einem Rohrelement ohne ringförmige radiale Erweiterungen besteht und erste Nuten (9a) aufweist und dass die genannte Öse (8) mit Kanten (10) versehen ist, die ein Gegenprofil zu den genannten ersten Nuten (9a) bilden und geeignet sind, eine vorbestimmte und stabile Winkelposition um die genannte zentrale Achse (1 a) zwischen dem genannten elastischen Körper (9) und der genannten Öse (8) zu definieren.

2. Kugelgelenk gemäß des vorangegangenen Anspruchs, bei dem der genannte elastische Körper (9) eine im Wesentlichen glatte zylindrische Innenfläche (9b) aufweist, die zu dem genannten Gehäuse (5) gerichtet ist und eine zylindrische Außenfläche, die die genannten ersten Nuten (9a) aufweist und bei der die genannte Öse (8) eine Innenfläche aufweist, die zu dem genannten elastischen Körper (9) gerichtet ist und die genannten Kanten (10) aufweist.

3. Kugelgelenk (1) gemäß einer oder mehrerer der vorangegangenen Ansprüche, bei dem der genannte elastische Körper (9) parallel zu der genannten zentralen Achse (1a) eine ähnliche Größe wie die genannte Öse (8) aufweist und bei dem der elastische Körper (9) vollkommen von dem genannten Gehäuse (5), den genannten Flanscherweiterungen (11a, 12a) und der genannten Öse (8) umschlossen wird.

4. Kugelgelenk (1) gemäß eines oder mehrerer der vorangegangenen Ansprüche, bei dem das genannte Gehäuse (5) eine Basis (11) und einen Deckel (12) umfasst, die geeignet sind, die genannte Innenkammer (6) am gegenüberliegenden Teil der genannten Öffnung (6a) zu verschließen und bei dem die genannten Flanscherweiterungen (11a, 12a) jeweils mit der genannten Basis (11) und dem genannten Deckel (12) verbunden sind.

5. Kugelgelenk (1) gemäß Anspruch 4, bei dem der genannte Deckel (12) eine ringförmige Rille (12b) aufweist, die geeignet ist, mit der genannten Basis (11) in Eingriff gebracht zu werden.

6. Kugelgelenk (1) gemäß der Ansprüche 4 oder 5, bei dem der genannte Deckel (12) mittels Ultraschall an der genannten Basis (11) verschweißt wird.

7. Kugelgelenk (1) gemäß eines oder mehrerer der vorangegangenen Ansprüche, bei dem der genannte elastische Körper (9) innen Vertiefungen (9c) aufweist, die geeignet sind, je nach Richtung der Kräfte unterschiedliche Verformungsfähigkeiten zu ergeben.

8. Kugelgelenk (1) gemäß Anspruch 7, bei dem die genannten inneren Vertiefungen (9c) den elastischen Körper (9) parallel zur genannten zentralen Achse (1a) durchlaufen.

9. Kugelgelenk (1) gemäß eines oder mehrerer der vorangegangenen Ansprüche, bei dem die genannte Innenkammer (6) eine Schale (7) umgibt, die einen Sitz (7a) definiert, dessen Maße im Wesentlichen zum Enthalten des genannten Kugelkopfes (4) geeignet sind und in dem die genannte Schale (7) Ausformungen (13) aufweist, die elastisch verformbar sind und als Kontrast mit der genannten Innenkammer (6) von der gegenüberliegenden Seite der genannten Öffnung (6a) in Eingriff gebracht werden können.

10. Kugelgelenk (1) gemäß des Anspruchs 9, bei dem die genannte Schale (7) aus zwei Halbschalen (14) besteht, die miteinander durch Gelenk verbunden sind und bei dem ein Federring (15) vorgesehen ist, der die genannten Halbschalten (14) auf den genannten Ausformungen (13) hält.

## Revendications

1. Joint à rotule (1) pour connecter des éléments mécaniques (2, 3) présentant sélectivement une tête sphérique (4), ledit joint à rotule (1) comprenant : un boîtier (5) définissant un axe central (1a) et ayant une chambre interne (6) pour ladite tête sphérique (4) et une ouverture d'accès (6a) à ladite chambre interne (6), un oeillet (8) annulaire à l'extérieur dudit boîtier (5), et un corps élastique (9) situé entre ledit boîtier (5) et ledit oeillet (8), **caractérisé en ce que** ledit boîtier (5) présente des expansions à bride (11a, 12a) dilatées transversalement par rapport audit axe central (1a) et en mesure de servir de flancs opposés pour contenir et protéger ledit corps élastique (9) ledit joint à rotule (1) étant **caractérisé en ce que** ledit corps élastique (9) est un élément tubulaire sans aucune expansion radiale annulaire et présente des premières rainures (9a) et **en ce que** ledit oeillet (8) est pourvu de secondes rainures (10) contrefaçonnées par rapport auxdites premières rainures et aptes à définir une position angulaire préfixée et stable dudit axe central (1 a) entre ledit corps élastique (9) et ledit oeillet (8).

2. Joint à rotule selon la revendication précédente, dans lequel ledit corps élastique (9) présente une surface cylindrique interne fondamentalement lisse (9b) tournée vers ledit boîtier (5) et une surface cylindrique externe présentant lesdites premières rainures (9a) et dans lequel ledit oeillet (8) présente une face interne tournée vers ledit corps élastique (9) et présentant lesdites secondes rainures (10).

3. Joint à rotule (1) selon l'une ou plusieurs des revendications précédentes, dans lequel ledit corps élastique (9) présente, parallèlement audit axe central (1a) une dimension similaire à celle dudit oeillet (8) et dans lequel ledit corps élastique (9) est entièrement renfermé entre ledit boîtier (5) lesdites expansions à bride (11 a, 12a) et ledit oeillet (8).

4. Joint à rotule (1) selon l'une ou plusieurs des revendications précédentes, dans lequel ledit boîtier (5) comprend une base (11) et un couvercle (12) apte à fermer ladite chambre interne (6) sur la partie opposée de ladite ouverture (6a), et dans laquelle lesdites expansions à bride (11a, 12a) sont solidaires, respectivement de ladite base (11) et dudit couvercle (12).

5. Joint à rotule (1) selon la revendication 4, dans lequel ledit couvercle (12) présente une rainure angulaire (12b) apte à accoupler par encastrement ladite base (11).

6. Joint à rotule (1) selon les revendications 4 ou 5, dans lequel ledit couvercle (12) est soudé par ultrasons à ladite base (11).

7. Joint à rotule (1) selon l'une ou plusieurs des revendications précédentes, dans lequel ledit corps élastique (9) présente des évidements internes (9c) aptes à déterminer des capacités de déformations différentes suivant le sens des efforts.

8. Joint à rotule (1) selon la revendication 7, dans lequel lesdits évidements (9c) traversent ledit corps élastique (9) parallèlement audit axe central (1 a).

9. Joint à rotule (1) selon l'une ou plusieurs des revendications précédentes, dans lequel ladite chambre interne (6) loge une coquille (7) définissant un siège (7a) fondamentalement dimensionné pour contenir la tête sphérique (4) et dans lequel ladite coquille (7) présente des appendices (13) élastiquement déformables et encastrables par opposition dans ladite chambre interne (6) sur la partie opposée de ladite ouverture (6a).

10. Joint à rotule (1) selon la revendication 9, dans lequel ladite coquille (7) comprend deux démi-coquilles (14) articulées entre elles et dans lesquelles est prévu un anneau élastique (15) qui encastre les deux demi-coquilles (14) dans lesdites appendices (13).
